# EUROPÄISCHE PATENTANMELDUNG

(11) **EP 0 812 853 A2**
(43) Veröffentlichungstag der Anmeldung: **17.12.1997**
(21) Anmeldenummer: 97108970.1
(22) Anmeldetag: 04.06.1997
(51) Int. Cl.: C07F 17/00, C08F 10/00

(54) **Übergangsmetallverbindung**

(30) Priorität: 14.06.1996 DE 19623707
(71) Anmelder: HOECHST AKTIENGESELLSCHAFT, 65929 Frankfurt am Main (DE)
(72) Erfinder: Riedel, Michael, Dr., 45130 Essen (DE); Erker, Gerhard, Prof. Dr., 48159 Münster (DE); Könnemann, Martin, Dl., 48161 Münster (DE)

(57) **Zusammenfassung**

Die vorliegende Erfindung betrifft eine Übergangsmetallverbindung der Formel I 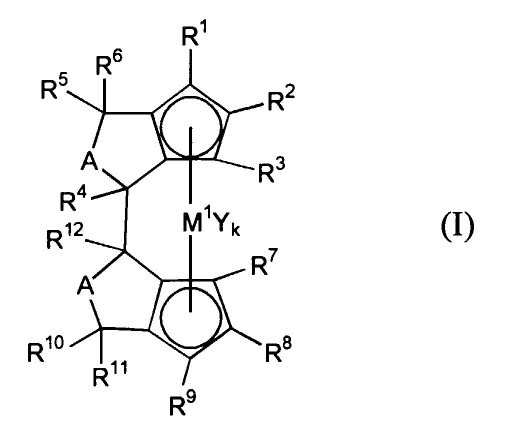
worin M¹ ein Übergangsmetall der Gruppe IIIb, IVb, Vb oder VIb des Periodensystems der Elemente ist,
Y gleich oder verschieden sind und ein Wasserstoffatom, eine OH-Gruppe, ein Halogenatom, eine C₁-C₄₀-kohlenwasserstoffhaltige Gruppe oder eine NR¹⁵₂-Gruppe, worin R¹⁵ ein Halogenatom, eine C₁-C₁₀ Alkylgruppe oder eine C₆-C₁₀-Arylgruppe ist, bedeuten,
k eine ganze Zahl ist, die der Wertigkeit des Übergangsmetallatoms M¹ minus zwei entspricht und im Fall, wenn Y eine Butadieneinheit bedeutet, k gleich 1 ist,
R¹, R², R³, R⁷, R⁸ und R⁹ gleich oder verschieden sind und ein Wasserstoffatom, ein Halogenatom, eine C₁-C₄₀-kohlenwasserstoffhaltige Gruppe, einen -SiR¹⁵₃, -NR¹⁵₂, -SiOR¹⁵₃, -SiSR¹⁵₃ oder -PR¹⁵₂-Rest bedeuten, worin R¹⁵ ein Halogenatom, eine C₁-C₁₀ Alkylgruppe oder eine C₆-C₁₀-Arylgruppe ist, oder zwei oder mehr benachbarte Reste R¹, R² und R³ oder R⁷_{,} R⁸ und R⁹ zusammen mit den sie verbindenen Atomen ein Ringsystem bilden,
R⁴, R⁵, R⁶, R¹⁰, R¹¹ und R¹² gleich oder verschieden sind und ein Wasserstoffatom, ein Halogenatom, eine C₁-C₄₀-kohlenwasserstoffhaltige Gruppe, einen -SiR¹⁵₃, -NR¹⁵₂, -SiOR¹⁵₃, -SiSR¹⁵₃ oder -PR¹⁵₂-Rest bedeuten, worin R¹⁵ ein Halogenatom, eine C₁-C₁₀ Alkylgruppe oder eine C₆-C₁₀-Arylgruppe ist, oder zwei oder mehr Reste R⁴, R⁵ und R⁶ oder R⁷, R⁸ und R⁹ zusammen mit den sie verbindenden Atomen ein Ringsystem bilden,
A gleich 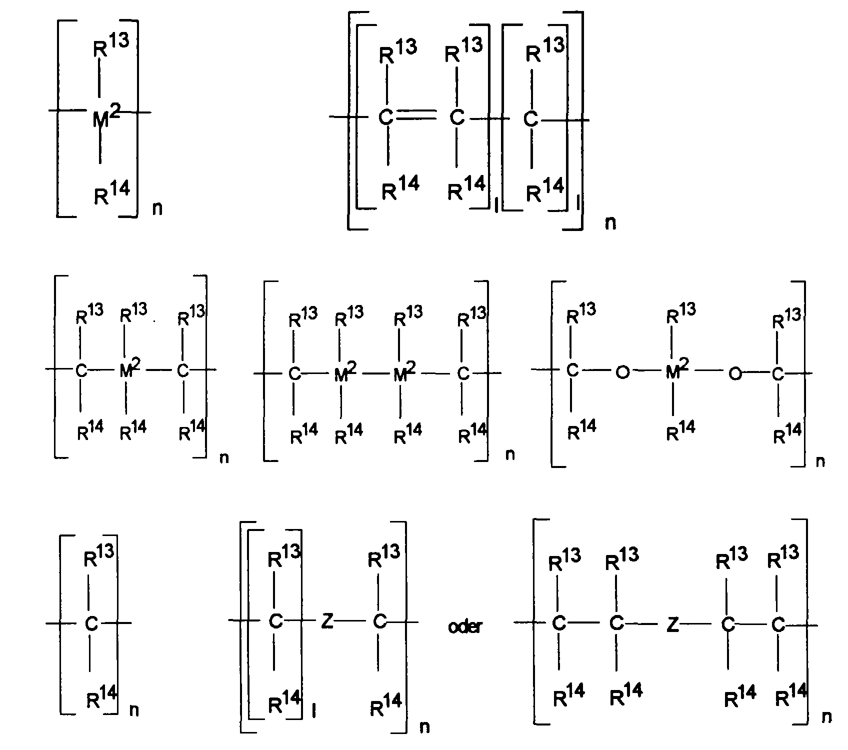 ist, wobei n eine ganze Zahl von 1 bis 20 ist, l eine ganze Zahl von 1 bis 20 ist,
Z gleich
   〉NR¹⁵ , 〉CO , 〉PR¹⁵ , 〉P(O)R¹⁵ , 〉SO ,
   SO₂, O oder S ist, worin R¹⁵ ein Halogenatom, eine C₁-C₁₀ Alkylgruppe oder eine C₆-C₁₀-Arylgruppe ist,
R¹³ und R¹⁴ gleich oder verschieden sind und ein Wasserstoffatom, ein Halogenatom oder eine C₁-C₄₀-kohlenwasserstoffhaltige Gruppe sind,oder jeweils zwei Reste R¹³, jeweils zwei Reste R¹⁴, oder je ein Rest R¹³ und R¹⁴ jeweils mit den sie verbindenen Atomen ein Ringsystem bilden, M² Silizium, Germanium oder Zinn ist, und die Übergangsmetallverbindung der Formel I verschieden ist von 8,8'-Biguaiazulen-titandichlorid.

Die Übergangsmetallverbindung eignet sich als Katalysatorkomponente für die Olefinpolymerisation.

## Beschreibung

Die vorliegende Erfindung betrifft eine Übergangsmetallverbindung und ein Verfahren zu ihrer Herstellung sowie ihre Verwendung als Katalysatorkomponente bei der Herstellung von Polyolefinen.

Aus der Literatur ist die Herstellung von Polyolefinen mit löslichen Übergangsmetallverbindungen sowie Monocyclopentadienylverbindungen in Kombination mit Aluminoxanen oder anderen Cokatalysatoren, die aufgrund ihrer Lewis-Acidität die neutrale Übergangsmetallverbindung in ein Kation überführen und stabilisieren können, bekannt (EP-A 129 368, EP-A 351 392, EP-A 416 815).

Übergangsmetallverbindungen und Monocyclopentadienylverbindungen sind nicht nur hinsichtlich der Polymerisation oder Oligomerisation von Olefinen von großem Interesse. Sie können auch als Hydrier-, Epoxidations-, Isomerisierungs-und C-C-Kupplungskatalysatoren eingesetzt werden (Chem. Rev. 1992, 92, 965-994).

Bei Einsatz löslicher Übergangsmetallverbindungen auf der Basis von Bis(cyclopentadienyl)zirkon-dialkyl bzw. dihalogenid in Kombination mit oligomeren Aluminoxanen erhält man ataktische Polymere, die wegen ihrer unausgewogenen und ungenügenden Produkteigenschaften technisch nur von geringer Bedeutung sind. Außerdem sind bestimmte Olefincopolymere nicht zugänglich.

Derivate des Zirkonocendichlorids, in denen die beiden substituierten Cyclopentadienylgruppen über eine Methylen-, Ethylen- oder eine Dimethylsilylbrücke miteinander verbunden sind, können aufgrund ihrer konformativen Starrheit als Katalysatoren zur isospezifischen Polymerisation von Olefinen eingesetzt werden (EP-A 316 155).

Aus J. Orgmet. Chem. 378 (1989), S.153 ist die Verbindung 8,8'-Biguaiazulentitandichlorid bekannt.

Es bestand die Aufgabe neue Übergangsmetallverbindungen zur Verfügung zu stellen.

Die vorliegende Erfindung betrift somit eine Übergangsmetallverbindung der Formel I 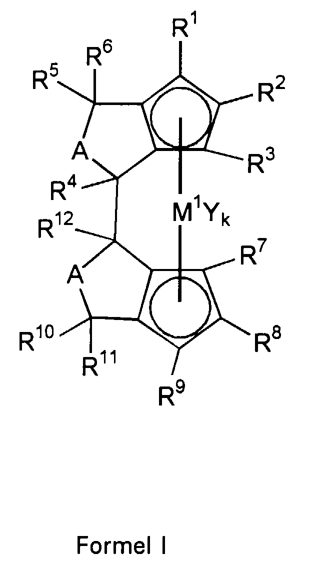
worin M¹ ein Übergangsmetall der Gruppe IIIb, IVb, Vb oder VIb des Periodensystems der Elemente ist,
Y gleich oder verschieden sind und ein Wasserstoffatom, eine OH-Gruppe, ein Halogenatom, eine C₁-C₄₀-kohlenwasserstoffhaltige Gruppe wie eine C₁-C₂₀-Alkyl, eine C₁-C₁₀-Alkoxy-, eine C₆-C₂₀-Aryl, eine C₂-C₁₂-Alkenyl-, eine C₇-C₄₀-Alkylaryl, eine C₈-C₄₀-Arylalkenylgruppe oder eine substituierte oder unsubstituierte Butadieneinheit, oder eine NR¹⁵₂-Gruppe, worin R¹⁵ ein Halogenatom, eine C₁-C₁₀ Alkylgruppe oder eine C₆-C₁₀-Arylgruppe ist, bedeuten,
k eine ganze Zahl ist, die der Wertigkeit des Übergangsmetallatoms M¹ minus zwei entspricht und im Fall, wenn Y eine Butadieneinheit bedeutet, k gleich 1 ist,
R¹, R², R³, R⁷, R⁸ und R⁹ gleich oder verschieden sind und ein Wasserstoffatom, ein Halogenatom, eine C₁-C₄₀-kohlenwasserstoffhaltige Gruppe wie eine C₁-C₂₀-Alkyl, eine C₁-C₁₀-Alkoxy-, eine C₆-C₂₀-Aryl, eine C₂-C₁₂-Alkenyl-, eine C₇-C₄₀-Alkylaryl, eine C₈-C₄₀-Arylalkenylgruppe, einen - SiR¹⁵₃, -NR¹⁵₂, -SiOR¹⁵₃, -SiSR¹⁵₃ oder -PR¹⁵₂-Rest bedeuten, worin R¹⁵ ein Halogenatom, eine C₁-C₁₀ Alkylgruppe oder eine C₆-C₁₀-Arylgruppe ist, oder zwei oder mehr benachbarte Reste R¹, R² und R³ oder R⁷_{,} R⁸ und R⁹ zusammen mit den sie verbindenen Atomen ein Ringsystem bilden, welches bevorzugt 4 bis 40 besonders bevorzugt 6 bis 20 Kohlenstoffatome enthält,
R⁴, R⁵, R⁶, R¹⁰, R¹¹ und R¹² gleich oder verschieden sind und ein Wasserstoffatom, ein Halogenatom, eine C₁-C₄₀-kohlenwasserstoffhaltige Gruppe wie eine C₁-C₂₀-Alkyl, eine C₁-C₁₀-Alkoxy-, eine C₆-C₂₀-Aryl, eine C₂-C₁₂-Alkenyl-, eine C₇-C₄₀-Alkylaryl oder eine C₈-C₄₀-Arylalkenylgruppe, einen - SiR¹⁵₃, -NR¹⁵₂, -SiOR¹⁵₃, -SiSR¹⁵₃ oder -PR¹⁵₂-Rest bedeuten, worin R¹⁵ ein Halogenatom, eine C₁-C₁₀ Alkylgruppe oder eine C₆-C₁₀-Arylgruppe ist, oder zwei oder mehr Reste R⁴, R⁵ und R⁶ oder R¹⁰, R¹¹ und R¹² zusammen mit den sie verbindenden Atomen ein Ringsystem bilden, welches bevorzugt 4 bis 40, besonders bevorzugt 6 bis 20 Kohlenstoffatome enthält,
A gleich 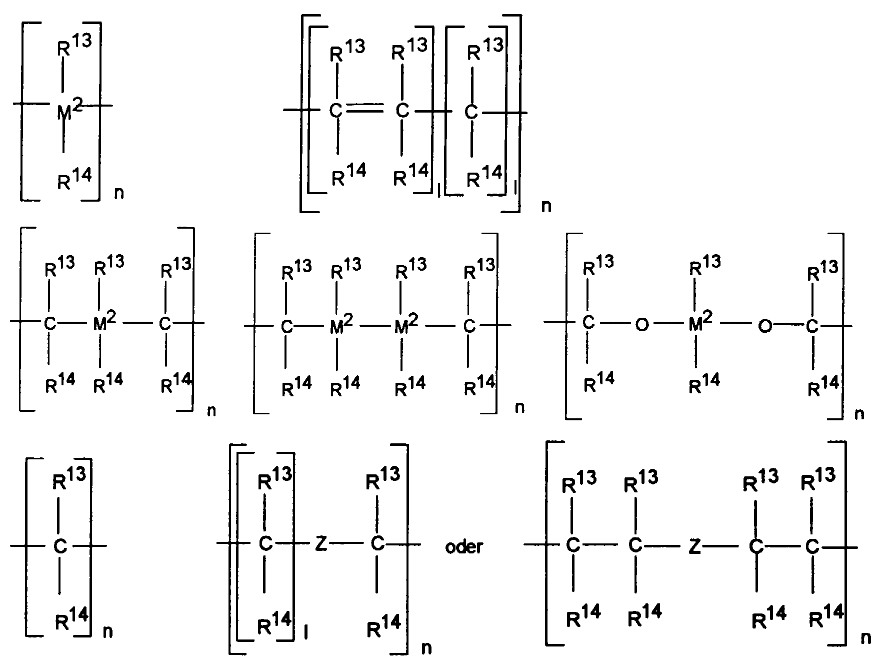 ist, wobei n eine ganze Zahl von 1 bis 20 ist, l eine ganze Zahl von 1 bis 20 ist,
Z gleich
   〉NR¹⁵ , 〉CO , 〉PR¹⁵ , 〉P(O)R¹⁵ , 〉SO ,
   SO₂, O oder S ist, worin R¹⁵ ein Halogenatom, eine C₁-C₁₀ Alkylgruppe oder eine C₆-C₁₀-Arylgruppe ist,
R¹³ und R¹⁴ gleich oder verschieden sind und ein Wasserstoffatom, ein Halogenatom oder eine C₁-C₄₀-kohlenwasserstoffhaltige Gruppe wie eine C₁-C₂₀-Alkyl, eine C₁-C₁₀-Alkoxy-, eine C₆-C₂₀-Aryl, eine C₂-C₁₂-Alkenyl-, eine C₇-C₄₀-Alkylaryl oder eine C₈-C₄₀-Arylalkenylgruppe bedeuten, oder jeweils zwei Reste R¹³, jeweils zwei Reste R¹⁴, oder je ein Rest R¹³ und R¹⁴ jeweils mit den sie verbindenen Atomen ein Ringsystem bilden und M² Silizium, Germanium oder Zinn ist, und die Übergangsmetallverbindung der Formel I verschieden ist von 8,8'-Biguaiazulen-titandichlorid.

Für die Übergangsmetallverbindung der Formel I gilt bevorzugt, daß M¹ ein Metall der Gruppe IV b des Periodensystems der Elemente ist, Y gleich sind und insbesondere eine C₁-C₁₀-kohlenwasserstoffhaltige Gruppe wie eine C₁-C₄-Alkyl-Gruppe, oder eine substituierte oder unsubstituierte, insbesondere eine unsubstiutierte, Butadieneinheit oder ein Halogenatom, insbesondere Chlor, bedeuten,
R¹, R², R³, R⁷, R⁸ und R⁹ gleich oder verschieden sind und ein Wasserstoffatom oder eine C₁-C₁₀-kohlenwasserstoffhaltige Gruppe wie eine C₁-C₁₀-Alkyl-Gruppe oder eine C₆-C₁₀-Aryl-Gruppe sind, oder zwei oder mehr benachbarte Reste R¹, R² und R³ oder R⁷_{,} R⁸ und R⁹ zusammen mit den sie verbindenen Atomen ein Ringsystem bilden, welches bevorzugt 6 bis 20 Kohlenstoffatome aufweist,
R⁴, R⁵, R⁶, R¹⁰, R¹¹ und R¹² gleich oder verschieden sind und ein Wasserstoffatom, ein Halogenatom oder eine C₁-C₁₀-kohlenwasserstoffhaltige Gruppe wie eine C₁-C₁₀-Alkyl-, insbesondere C₁-C₄-Alkyl-Gruppe oder eine C₆-C₁₀-Aryl-, insbesondere C₆-Aryl-Gruppe, bedeuten,
A gleich 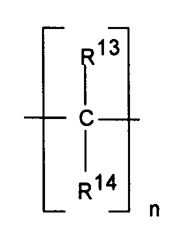 ist, wobei n eine ganze Zahl von 1 bis 8, insbesondere 1, 2, 3 oder 4 ist, R¹³ und R¹⁴ gleich oder verschieden sind und ein Wasserstoffatom oder eine C₁-C₁₀-kohlenwasserstoffhaltige Gruppe wie eine C₁-C₁₀-Alkyl-, insbesondere C₁-C₄-Alkyl-Gruppe, eine C₆-C₁₀-Aryl-, insbesondere C₆-Aryl-Gruppe sind, oder jeweils zwei Reste R¹³, jeweils zwei Reste R¹⁴, oder je ein Rest R¹³ und R¹⁴ jeweils mit den sie verbindenen Atomen ein Kohlenwasserstoffringsystem bilden, welches bevorzugt 6 bis 10 Kohlenstoffatome aufweist.

Besonders bevorzugt sind Übergangsmetallverbindungen der Formel I, worin
M¹ gleich Titanium oder Zirkonium ist,
Y gleich sind und insbesondere Methyl,- Phenyl- oder Chlor bedeuten,
R¹, R², R³, R⁷, R⁸ und R⁹ gleich oder verschieden sind und ein Wasserstoffatom, eine C₁-C₄-Alkylgruppe wie Methyl, Ethyl, Propyl, Isopropyl, Butyl, Isobutyl oder eine C₆-Arylgruppe wie Phenyl bedeuten, oder R¹ und R² oder R² und R³ oder R⁷ und R⁸ oder R⁸ und R⁹ mit den sie verbindenen Atomen ein aromatisches Kohlenwasserstoffringsystem bilden, z.B. einen Sechsring, der seinerseits substituiert sein kann,
A gleich 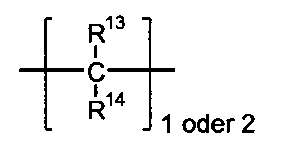 ist, worin R¹³ und R¹⁴ gleich oder verschieden sind und ein Wasserstoffatom, eine C₁-C₄-Alkylgruppe wie Methyl, Ethyl, Propyl, Isopropyl, Butyl, Isobutyl oder eine C₆-Arylgruppe wie Phenyl sind,
und die Übergangsmetallverbindung der Formel I besonders bevorzugt zwei gleich substituierte Cyclopentadienylliganden aufweist, so daß die Übergangsmetallverbindung eine Symmetrie besitzt.

Die Symmetrie ist vorzugsweise eine Spiegelsymmetrie (im Falle der Meso-Form) oder eine C₂-Symmetrie (im Fall der racemischen Form).

Anhand der folgenden Übergangsmetallverbindung soll die Nomenklatur erläutert werden:
trans-4,4'-Bis(4-phenyl-2,7,7-trimethyl-4,5,6,7-η⁵-tetrahydroindenyl)zirkoniumdichlorid:

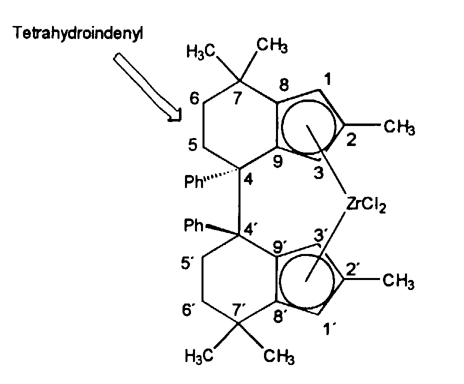

Beispiele für erfindungsgemäße Übergangsmetallverbindungen der Formel I sind:
trans-4,4'-Bis(4-phenyl-2,7,7-trimethyl-4,5,6,7-η⁵-tetrahydroindenyl)zirkoniumdichlorid
trans-4,4'-Bis(4-phenyl-2,7,7-trimethyl-4,5,6,7-η⁵-tetrahydroindenyl)zirkoniumdichlorid
trans-4,4'-Bis(2-benzyl-4-phenyl-7,7-dimethyl-4,5,6,7-η⁵-tetrahydroindenyl)zirkoniumdi-chlorid
trans-4,4'-Bis(4,7,7-trimethyl-4,5,6,7-η⁵-tetrahydroindenyl)zirkoniumdichlorid
trans-4,4'-Bis(2-isopropyl-4,7,7-trimethyl-4,5,6,7-η⁵-tetrahydroindenyl)zirkoniumdichlorid
trans-4,4'-Bis(2-isopropyl-4,7,7-trimethyl-4,5,6,7-η⁵-tetrahydroindenyl)zirkoniumdimethyl
trans-4,4'-Bis(4-phenyl-2,7,7-trimethyl-4,5,6,7-η⁵-tetrahydroindenyl)zirkoniumdimethyl
trans-4,4'-Bis(2-benzyl-4-phenyl-7,7-dimethyl-4,5,6,7-η⁵-tetrahydroindenyl)zirkoniumdimethyl
trans-4,4'-Bis(2-isopropyl-4,7,7-trimethyl-4,5,6,7-η⁵-tetrahydroindenyl)butadien-zirkonium
trans-4,4'-Bis(4-phenyl-2,7,7-trimethyl-4,5,6,7-η⁵-tetrahydroindenyl)butadien-zirkonium
trans-4,4'-Bis(2-benzyl-4-phenyl-7,7-dimethyl-4,5,6,7-η⁵-tetrahydroindenyl)butadien-zirkonium
trans-4,4'-Bis(4-methyl-4,5,6-η⁵-trihydropentalen)zirkoniumdichlorid
trans-4,4'-Bis(4-phenyl-4,5,6-η⁵-trihydropentalen)zirkoniumdichlorid
trans-4,4'-Bis(4-methyl-6-phenyl-4,5,6-η⁵-trihydropentalen)zirkoniumdichlorid
trans-4,4'-Bis(4-methyl-6,6-diphenyl-4,5,6-η⁵-trihydropentalen)zirkoniumdichlorid
trans-4,4'-Bis(4,6,6-triphenyl-4,5,6-η⁵- trihydropentalen)zirkoniumdichlorid
trans-4,4'-Bis(2-benzyl-4-methyl-4,5,6-η⁵-trihydropentalen)zirkoniumdichlorid
trans-4,4'-Bis(2-isopropyl-4-phenyl-4,5,6-η⁵-trihydropentalen)zirkoniumdichlorid
trans-4,4'-Bis(2,4-dimethyl-6-phenyl-4,5,6-η⁵-trihydropentalen)zirkoniumdichlorid
trans-4,4'-Bis(2-isopropyl-4-methyl-6,6-diphenyl-4,5,6-η⁵-trihydropentalen)zirkoniumdichlorid
trans-4,4'-Bis(2-methyl-4,6,6-triphenyl-4,5,6-η⁵-trihydropentalen)zirkoniumdichlorid
trans-4,4'-Bis(4-methyl-4,5,6-η⁵-trihydropentalen)zirkoniumdimethyl
trans-4,4'-Bis(4-methyl-6-phenyl-4,5,6-η⁵-trihydropentalen)zirkoniumdimethyl
trans-4,4'-Bis(2-isopropyl-4-methyl-4,5,6-η⁵-trihydropentalen)zirkoniumdimethyl
trans-4,4'-Bis(4-methyl-4,5,6-η⁵-trihydropentalen)butadien-zirkonium
trans-4,4'-Bis(4-methyl-6-phenyl-4,5,6-η⁵-trihydropentalen)butadien-zirkonium
trans-4,4'-Bis(2-isopropyl-4-methyl-4,5,6-η⁵-trihydropentalen)butadien-zirkonium

Die Herstellung der erfindungsgemäßen Übergangsmetallverbindungen soll durch das nachfolgende Syntheseschema veranschaulicht werden.

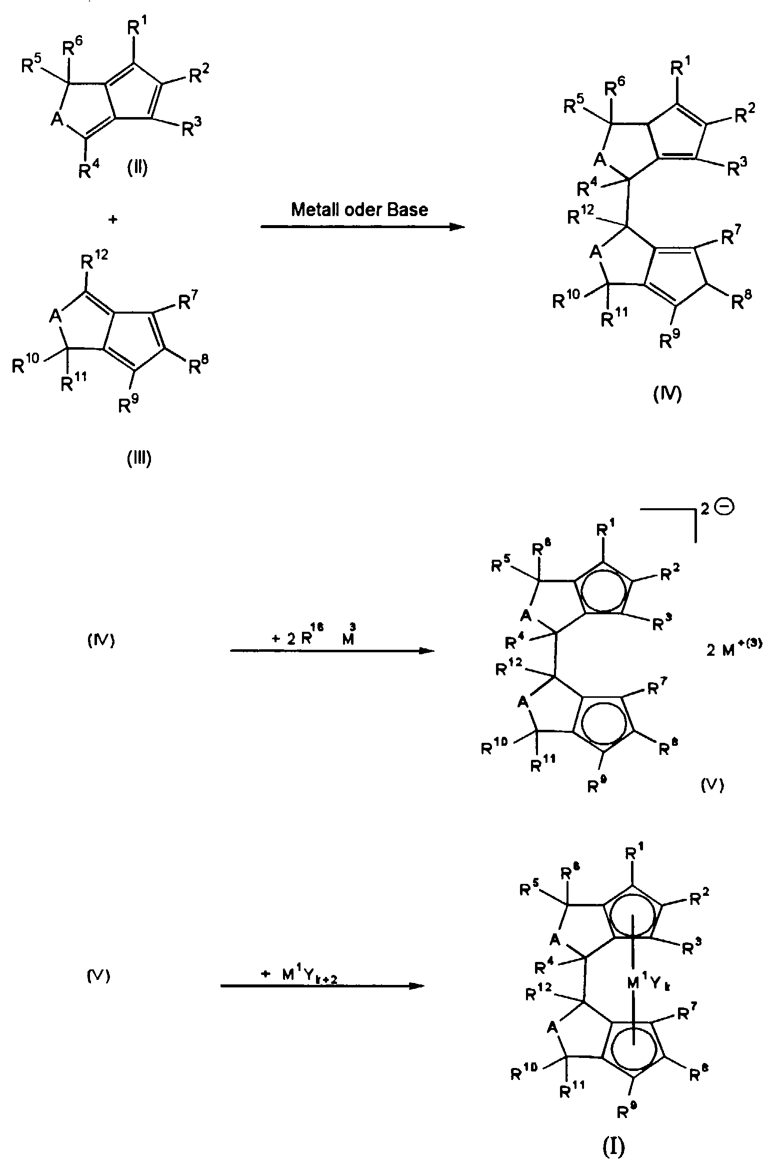

Die Verbindungen der Formel (II) und (III) können nach literaturbekannten Methoden hergestellt werden (J. Org. Chem. 1995, 60, 813; J. Org. Chem. 1989; Chem. Ber. 1990, 123, 549; Angew. Chem. 1970, 82, 877; Tetrahedron Lett. 1977, 639). Die Umsetzung der Verbindungen der Formel (I) und (II) zu den Verbindungen (IV) ist im Prinzip bekannt (Angew. Chem. 1993, 105, 1103; Helv. Chim. Acta 1993, 76, 1457; Angew. Chem. Int. Edit.1991, 30, 693). Die Deprotonierung der Verbindung (IV) kann mit einer beliebigen Base R¹⁶M³ erfolgen, wobei M³ ein Metall der Gruppe Ia oder IIa des Periodensystems der Elemente ist und R¹⁶ eine C₁-C₁₀-kohlenwasserstoffhaltige Gruppe wie eine C₁-C₁₀-Alkyl-, C₆-C₁₀-Aryl- oder C₁-C₁₀-Alkoxygruppe bedeutet. Insbesondere kann die Deprotonierung mit Dibutylmagnesium, Methyllithium, Butyllithium, Lithiumbishexamethyl-disilazid oder Kalium-tert-butylat erfolgen. Die Umsetzung der durch diese Deprotonierung enstehenden Verbindung (V) in einem inertem Lösungmittel mit der entsprechenden Metallverbindung M¹Yₖ₊₂, wobei k eine ganze Zahl von 1 bis 3 ist (z. B.Vanadiumtrichlorid, Zirkoniumtetrachlorid, Niobpentachlorid) ist im Prinzip bekannt und führt zur Bildung der erfindungsgemäßen Übergangsmetallverbindung (I).

Geeignete inerte Lösungsmittel sind aliphatische oder aromatische Lösemittel, wie beispielsweise Hexan oder Toluol, etherische Lösemittel, wie beispielsweise Tetrahydrofuran oder Diethylether oder halogenierte Kohlenwasserstoffe, wie beispielsweise Methylenchlorid oder halogenierte aromatische Kohlenwasserstoffe wie beispielsweise o-Dichlorbenzol.

Die Biscyclopentadienylverbindungen der Formel (IV), bei welchen mindestens einer der Reste R¹ bis R³ sowie mindestens einer der Reste R⁷ bis R⁹ Wasserstoff ist, können durch literaturbekannte Methoden zu den Fulvenen der Formel (VI) umgesetzt werden. Dies soll durch das nachfolgende Schema verdeutlicht werden, wobei R¹⁷ und R¹⁸ gleich oder verschieden und wie R⁴ definiert sind.

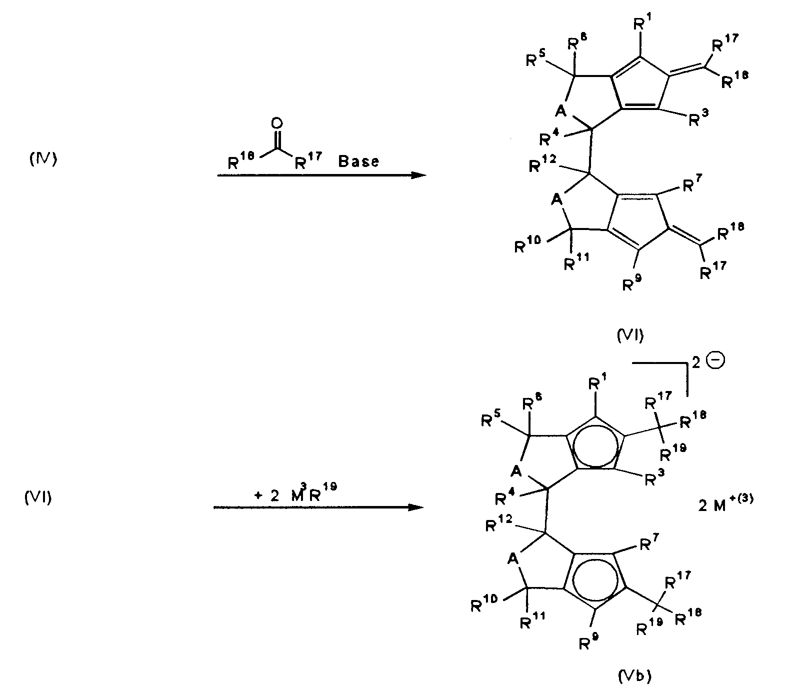

Durch Umsetzung des Fulvens der Formel (VI) mit zwei Äquivalenten einer metallorganischen Verbindungen der Formel R¹⁹M³ (wobei R¹⁷, R¹⁸ und R¹⁹ gleich oder verschieden und wie R⁴ definiert sind) führt zur Bildung der Dianionverbindung (V b). Die Umsetzung zu den Übergangsmetallverbindungen der Formel (I) erfolgt entsprechend der Reaktion von (V) nach (I).

Eine weitere Möglichkeit Kupplungsvorläufer der Formel (II) herzustellen, bei der A gleich CH₂-CH₂ bedeutet, ist im folgenden Syntheseschema veranschaulicht. Dabei ist M⁴ ein Metall der Gruppe Ib oder II b, besonders bevorzugt I b, und M⁵ ein Metall der Gruppe I a des Periodensystems der Elemente.

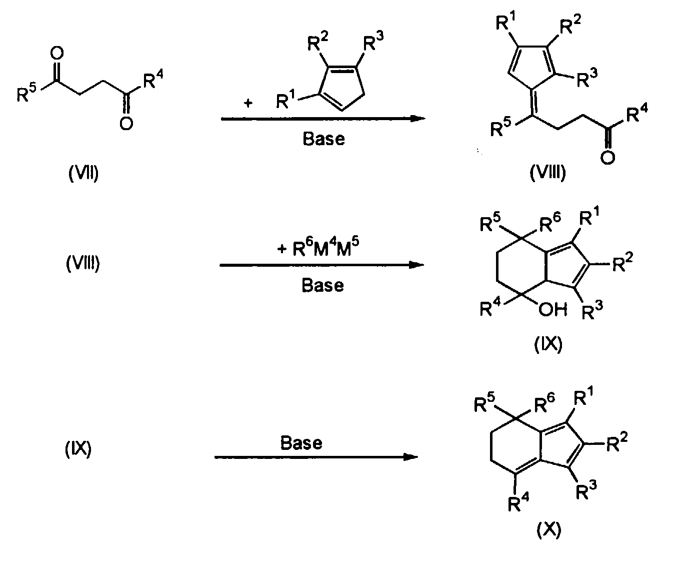

Die in den Formeln II bis X verwendeten Symbole haben die gleiche Bedeutung wie in Formel I angegeben.

Die erfindungsgemäßen Übergangsmetallverbindungen sind hochaktive Katalysatorkomponenten für die Olefinpolymerisation. Je nach Substitutionsmuster der Liganden können die Übergangsmetallverbindungen als Isomerengemisch anfallen. Die Übergangsmetallverbindungen werden bevorzugt isomerenrein eingesetzt. Die Verwendung des Racemats ist in den meisten Fällen ausreichend.

Die vorliegende Erfindung betrifft außerdem ein Verfahren zur Herstellung eines Olefinpolymeren durch Polymerisation eines oder mehrerer Olefine in Gegenwart eines Katalysators, enthaltend mindestens eine Übergangsmetallverbindung der Formel I und mindestens einen Cokatalysator. Die Polymerisation kann eine Homo- oder Copolymerisation sein.

Bevorzugt werden in dem erfindungsgemäßen Verfahren eines oder mehrere Olefine der Formel R^{a}-CH = CH-R^{b} homo- oder copolymerisiert, worin R^{a} und R^{b} gleich oder verschieden sind und ein Wasserstoffatom oder einen Kohlenwasserstoffrest mit 1 bis 20 C-Atomen, insbesondere 1 bis 10 C-Atomen, bedeuten, oder R^{a} und R^{b} zusammen mit den sie verbindenen Atomen einen oder mehrere Ringe bilden. Beispiele für solche Olefine sind 1-Olefine wie Ethylen, Propylen, 1-Buten, 1-Penten, 1-Hexen, 4-Methyl-1-penten oder 1-Octen, Styrol, cyclische und acyclische Diene wie 1,3-Butadien, Isopren, 1,4-Hexadien, Norbornadien, Vinylnorbornen oder 5-Ethylidennorbornen. Bevorzugt werden in dem erfindungsgemäßen Verfahren Ethylen oder Propylen homopolymerisiert, oder Ethylen und Propylen werden miteinander und/oder mit einem oder mehreren 1-Olefinen mit 4 bis 20 C-Atomen und/oder einem oder mehreren Dienen mit 4 bis 20 C-Atomen, wie 1,3-Butadien, copolymerisiert.

Die Polymerisation wird bevorzugt bei einer Temperatur von -60 bis 250°C, besonders bevorzugt 50 bis 200°C, durchgeführt. Der Druck beträgt bevorzugt 0,5 bis 2000 bar, besonders bevorzugt 5 bis 64 bar.

Die Polymerisation kann in Lösung, in Masse, in Suspension oder in der Gasphase, kontinuierlich oder diskontinuierlich, ein- oder mehrstufig durchgeführt werden. Eine bevorzugte Ausführungsform ist die Suspensions-und die Gasphasenpolymerisation.

Bevorzugt enthält der in dem erfindungsgemäßen Verfahren eingesetzte Katalysator eine Übergangsmetallverbindung. Es können auch Mischungen zweier oder mehrerer Übergangsmetallverbindungen eingesetzt werden, z.B. zur Herstellung von Polyolefinen mit breiter oder multimodaler Molmassenverteilung.

Prinzipiell ist als Cokatalysator in dem erfindungsgemäßen Verfahren jede Verbindung geeignet, die aufgrund ihrer Lewis-Acidität die neutrale Übergangsmetallverbindung in ein Kation überführen und dieses stabilisieren kann ("labile Koordination''). Darüber hinaus soll der Cokatalysator oder das aus ihm gebildete Anion keine weiteren Reaktionen mit dem gebildeten Übergangsmetallverbindungskation eingehen (EP 427 697). Als Cokatalysator wird bevorzugt eine Aluminiumverbindung und/oder eine Borverbindung verwendet.

Die Borverbindung hat bevorzugt die Formel R²⁰ₓNH₄₋ₓBR²¹₄, R²⁰ₓPH₄₋ₓBR²¹₄, R²⁰₃CBR²¹₄ oder BR²¹₃, worin x eine Zahl von 1 bis 4, bevorzugt 3, bedeutet, die Reste R²⁰ gleich oder verschieden, bevorzugt gleich sind, und C₁-C₁₀-Alkyl oder C₆-C₁₈-Aryl sind, oder zwei Reste R²⁰ zusammen mit dem sie verbindenden Atomen einen Ring bilden, und die Reste R²¹ gleich oder verschieden, bevorzugt gleich sind, und C₆-C₁₈-Aryl sind, das durch Alkyl, Haloalkyl oder Fluor substituiert sein kann. Insbesondere steht R²⁰ für Ethyl, Propyl, Butyl oder Phenyl und R²¹ für Phenyl, Pentafluorophenyl, 3,5-Bistrifluoromethylphenyl, Mesityl, Xylyl oder Tolyl (EP 277 003, EP 277 004 und EP 426 638).

Bevorzugt wird als Cokatalysator eine Aluminiumverbindung wie Aluminoxan und/oder ein Aluminiumalkyl eingesetzt.

Besonders bevorzugt wird als Cokatalysator ein Aluminoxan, insbesondere der Formel XIa für den linearen Typ und/oder der Formel XIb für den cyclischen Typ verwendet, 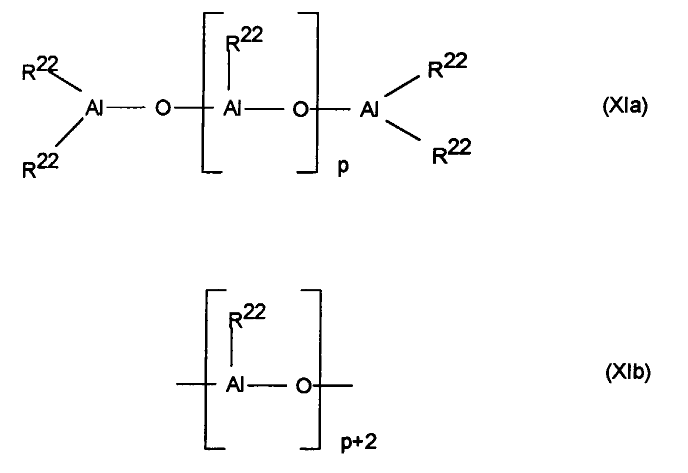 , wobei in den Formeln XIa und XIb die Reste R²² gleich oder verschieden sind und Wasserstoff oder eine C₁-C₂₀-Kohlenwasserstoffgruppe wie eine C₁-C₁₈-Alkylgrupppe, eine C₆-C₁₈-Arylgruppe wie Phenyl oder Benzyl bedeuten, und p eine ganze Zahl von 2 bis 50, bevorzugt 10 bis 35 bedeutet.

Bevorzugt sind die Reste R²² gleich und bedeuten Wasserstoff, Methyl, Isobutyl, Phenyl oder Benzyl, besonders bevorzugt Methyl.

Sind die Reste R²² verschieden, so sind sie bevorzugt Methyl und Wasserstoff oder alternativ Methyl und Isobutyl, wobei Wasserstoff oder Isobutyl bevorzugt in einem zahlenmäßigen Anteil von 0,01 bis 40 % (der Reste R²²) enthalten sind.

Die Verfahren zur Herstellung der Aluminoxane sind bekannt. Die genaue räumliche Stuktur der Aluminoxane ist nicht bekannt (J. Am. Chem. Soc. (1993) 115, 4971). Beispielsweise ist denkbar, daß sich Ketten und Ringe zu größeren zweidimensionalen oder dreidimensionalen Strukturen verbinden.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist möglich, die Übergangsmetallverbindung vor dem Einsatz in der Polymerisationsreaktion mit einem Cokatalysator, insbesondere einem Aluminoxan vorzuaktivieren. Dadurch wird die Polymerisationsaktivität deutlich erhöht. Die Voraktivierung der Übergangsmetallverbindung wird vorzugsweise in Lösung vorgenommen. Bevorzugt wird dabei die Übergangsmetallverbindung in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösungsmenge. Die Übergangsmetallverbindung kann in der gleichen Konzentration eingesetzt werden, vorzugsweise wird es jedoch in einer Menge von 10⁻⁴ bis 1 mol pro mol Aluminoxan eingesetzt. Die Voraktivierungsdauer beträgt 5 Minuten bis 60 Stunden, vorzugsweise 5 bis 60 Minuten. Man arbeitet bei einer Temperatur von -78 bis 150°C, vorzugsweise 0 bis 80°C.

Die Übergangsmetallverbindung wird bevorzugt in einer Konzentration, bezogen auf das Übergangsmetall, von 10⁻³ bis 10⁻⁸, vorzugsweise 10⁻⁴ bis 10⁻⁷ mol Übergangsmetall pro dm³ Lösemittel bzw. pro dm³ Reaktorvolumen angewendet. Das Aluminoxan, wird bevorzugt in einer Konzentration von 10⁻⁶ bis 10^{**-**1} mol, vorzugsweise 10⁻⁵ bis 10⁻² mol pro dm³ Lösemittel bzw. pro dm³ Reaktorvolumen verwendet. Die anderen genannten Cokatalysatoren werden in etwa äquimolaren Mengen zu der Übergangsmetallverbindung verwendet. Prinzipiell sind aber auch höhere Konzentrationen möglich.

Das Aluminoxan kann auf verschiedene Arten nach bekannten Verfahren hergestellt werden. Eine der Methoden ist beispielsweise, daß eine Aluminiumkohlenwasserstoffverbindung und/oder ein Hydridoaluminiumkohlenwasserstoffverbindung mit Wasser (gasförmig, fest, flüssig oder gebunden - beispielsweise als Kristallwasser) in einem inerten Lösungsmittel (wie beispielsweise Toluol) umgesetzt wird. Zur Herstellung eines Aluminoxans mit verschiedenen Resten R²⁴ werden beispielsweise entsprechend der gewünschten Zusammensetzung zwei verschiedene Aluminiumtrialkyle mit Wasser umgesetzt.

Zur Entfernung von im Olefin vorhandenen Katalysatorgiften ist eine Reinigung mit einer Aluminiumverbindung, bevorzugt einem Aluminiumalkyl, wie Trimethylaluminium oder Triethylaluminium, vorteilhaft. Diese Reinigung kann sowohl im Polymerisationssystem selbst erfolgen, oder das Olefin wird vor der Zugabe in das Polymerisationssystem mit der Aluminiumverbindung in Kontakt gebracht und anschließend wieder abgetrennt.

Als Molmassenregler und/oder zur Steigerung der Katalysatoraktivität kann in dem erfindungsgemäßen Verfahren Wasserstoff zugegeben werden. Hierdurch können niedermolekulare Polyolefine wie Wachse erhalten werden.

Bevorzugt wird in dem erfindungsgemäßen Verfahren die Übergangsmetallverbindung mit dem Cokatalysator außerhalb des Polymerisationsreaktors in einem separaten Schritt unter Verwendung eines geeigneten Lösemittels umgesetzt. Dabei kann eine Trägerung vorgenommen werden.

Im dem erfindungsgemäßen Verfahren kann mit Hilfe der Übergangsmetallverbindung eine Vorpolymerisation erfolgen. Zur Vorpolymerisation wird bevorzugt das (oder eines der) in der Polymerisation eingesetzte(n) Olefin(e) verwendet.

Der in dem erfindungsgemäßen Verfahren eingesetzte Katalysator kann geträgert sein. Durch die Trägerung läßt sich beispielsweise die Kornmorphologie des hergestellten Polyolefins steuern. Dabei kann die Übergangsmetallverbindung zunächst mit dem Träger und anschließend mit dem Cokatalysator umgesetzt werden. Es kann auch zunächst der Cokatalysator geträgert werden und anschließend mit der Übergangsmetallverbindung umgesetzt werden. Auch ist es möglich das Reaktionsprodukt von Übergangsmetallverbindung und Cokatalysator zu trägern. Geeignete Trägermaterialien sind beispielsweise Silikagele, Aluminiumoxide, festes Aluminoxan oder andere anorganische Trägermaterialien wie beispielsweise Magnesiumchlorid. Ein geeignetes Trägermaterial ist auch ein Polyolefinpulver in feinverteilter Form. Die Herstellung eines geträgerten Cokatalysators kann beispielsweise wie in EP 567 952 beschrieben durchgeführt werden.

Vorzugsweise wird der Cokatalysator, z.B. Aluminoxan, auf einen Träger wie beispielsweise Silikagele, Aluminiumoxide, festes Aluminoxan, andere anorganische Trägermaterialien oder auch ein Polyolefinpulver in feinverteilter Form aufgebracht und dann mit der Übergangsmetallverbindung umgesetzt.

Als anorganische Träger können Oxide eingesetzt werden, die flammenpyrolytisch durch Verbrennung von Element-Halogeniden in einer Knallgas-Flamme erzeugt wurden, oder als Kieselgele in bestimmten Korngrößen-Verteilungen und Kornformen herstellbar sind.

Die Herstellung eines geträgerten Cokatalysators kann beispielsweise wie in EP 578 838 beschrieben in der folgenden Weise in einem Edelstahl-Reaktor in explosionsgeschützter Ausführung mit einem Umpumpsystem der Druckstufe 60 bar, mit Inertgasversorgung, Temperierung durch Mantelkühlung und zweitem Kühlkreislauf über einen Wärmetauscher am Umpumpsystem erfolgen. Das Umpumpsystem saugt den Reaktorinhalt über einen Anschluß im Reaktorboden mit einer Pumpe an und drückt ihn in einen Mischer und durch eine Steigleitung über einen Wärmetauscher in den Reaktor zurück. Der Mischer ist so gestaltet, daß sich in dem Zulauf ein verengter Rohrquerschnitt befindet, wo eine erhöhte Strömungsgeschwindigkeit entsteht, und in dessen Turbulenzzone axial und entgegen der Strömungsrichtung eine dünne Zuleitung geführt ist, durch welche - getaktet - jeweils eine definierte Menge Wasser unter 40 bar Argon eingespeist werden kann. Die Kontrolle der Reaktion erfolgt über einen Probennehmer am Umpumpkreislauf. Im Prinzip sind auch andere Reaktoren geeignet.

Weitere Möglichkeiten der Herstellung eines geträgerten Cokatalysators sind in EP 578 838 beschrieben. Danach wird die erfindungsgemäße Übergangsmetallverbindung auf den geträgerten Cokatalysator aufgebracht, indem die gelöste Übergangsmetallverbindung mit dem geträgerten Cokatalysator gerührt wird. Das Lösemittel wird entfernt und durch einen Kohlenwasserstoff ersetzt, in dem sowohl Cokatalysator als auch die Übergangsmetallverbindung unlöslich sind.

Die Reaktion zu dem geträgerten Katalysatorsystem erfolgt bei einer Temperatur von -20 bis + 120°C, bevorzugt 0 bis 100°C, besonders bevorzugt bei 15 bis 40°C. Die Übergangsmetallverbindung wird mit dem geträgerten Cokatalysator in der Weise umgesetzt, daß der Cokatalysator als Suspension mit 1 bis 40 Gew.-%, bevorzugt mit 5 bis 20 Gew.-% in einem aliphatischen, inerten Suspensionsmittel wie n-Decan, Hexan, Heptan, Dieselöl mit einer Lösung der Übergangsmetallverbindung in einem inerten Lösungsmittel wie Toluol, Hexan, Heptan, Dichlormethan oder mit dem feingemahlenen Feststoff des Übergangsmetallverbindung zusammengebracht wird. Umgekehrt kann auch eine Lösung der Übergangsmetallverbindung mit dem Feststoff des Cokatalysators umgesetzt werden.

Die Umsetzung erfolgt durch intensives Mischen, beispielsweise durch Verrühren bei einem molaren Al/M¹-Verhältnis von 100/1 bis 10000/1, bevorzugt von 100/1 bis 3000/1 sowie einer Reaktionszeit von 5 bis 120 Minuten, bevorzugt 10 bis 60 Minuten, besonders bevorzugt 10 bis 30 Minuten unter inerten Bedingungen.
Im Laufe der Reaktionszeit zur Herstellung des geträgerten Katalysatorsystems treten insbesondere bei der Verwendung der erfindungsgemäßen Übergangsmetallverbindungen mit Absorptionsmaxima im sichtbaren Bereich Veränderungen in der Farbe der Reaktionsmischung auf, an deren Verlauf sich der Fortgang der Reaktion verfolgen läßt.

Nach Ablauf der Reaktionszeit wird die überstehende Lösung abgetrennt, beispielsweise durch Filtration oder Dekantieren. Der zurückbleibende Feststoff wird 1- bis 5-mal mit einem inerten Suspensionsmittel wie Toluol, n-Decan, Hexan, Dieselöl, Dichlormethan zur Entfernung löslicher Bestandteile im gebildeten Katalysator, insbesondere zur Entfernung von nicht umgesetzter und damit löslicher Übergangsmetallverbindung, gewaschen.

Das so hergestellte geträgerte Katalysatorsystem kann im Vakuum getrocknet als Pulver oder noch Lösemittel behaftet wieder resuspendiert und als Suspension in einem der vorgenannten inerten Suspensionsmittel in das Polymerisationssystem eindosiert werden.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff; als solcher sei beispielsweise Propan, Butan, Hexan, Heptan, Isooctan, Cyclohexan, Methylcyclohexan, genannt. Weiterhin kann eine Benzin- bzw. hydrierte Dieselölfraktion benutzt werden. Brauchbar ist auch Toluol. Bevorzugt wird im flüssigen Monomeren polymerisiert.

Vor der Zugabe des Katalysators, insbesondere des geträgerten Katalysatorsystems (aus einer erfindungsgemäßen Übergangsmetallverbindung und einem geträgerten Cokatalysator beziehungsweise aus einer erfindungsgemäßen Übergangsmetallverbindung und einer aluminiumorganischen Verbindung auf einem Polyolefinpulver in feinverteilter Form), kann zusätzlich eine andere Aluminiumalkylverbindung wie beispielsweise Trimethylaluminium, Triethylaluminium, Triisobutylaluminium, Trioctylaluminium oder Isoprenylaluminium zur Inertisierung des Polymerisationssystems (beispielsweise zur Abtrennung vorhander Katalysatorgifte im Olefin) in den Reaktor gegeben werden. Diese wird in einer Konzentration von 100 bis 0,01 mmol Al pro kg Reaktorinhalt dem Polymerisationssystem zugesetzt. Bevorzugt werden Triisobutylaluminium und Triethylaluminium in einer Konzentration von 10 bis 0,1 mmol Al pro kg Reaktorinhalt. Dadurch kann bei der Synthese eines geträgerten Katalysatorsystems das molare Al/M¹-Verhältnis klein gewählt werden.

Werden inerte Lösemittel verwendet, werden die Monomeren gasförmig oder flüssig zudosiert.

Die Dauer der Polymerisation ist beliebig, da das in dem erfindungsgemäßen Verfahren zu verwendende Katalysatorsystem einen nur geringen zeitabhängigen Abfall der Polymerisationsaktivität zeigt.

Die nachfolgenden Beispiele dienen zur näheren Erläuterung der Erfindung.

Herstellung und Handhabung organometallischer Verbindungen erfolgten unter Ausschluß von Luft und Feuchtigkeit unter Argon-Schutzgas (Schlenk-Technik). Alle benötigten Lösungsmittel wurden vor Gebrauch durch mehrstündiges Sieden über einem geeigneten Trockenmittel und anschließende Destillation unter Argon absolutiert.

Die Verbindungen wurden mit ¹H-NMR, ¹³C-NMR- und IR-Spektroskopie charakterisiert.

### Beispiel 1: trans-4,4'-Bis(4-phenyl-7,7-dimethyl-4,5,6,7-η⁵-tetrahydroindenyl)zirkoniumdichlorid

### 1-Phenyl-4(2',4'-cyclopentadien-1'-yliden)-pentan-1-on

Unter Schutzgas werden zu einer Lösung von 9,8 g (55,6 mmol) 1-Phenyl-1,4-pentadion in ca. 700 ml Methanol 6,6 ml (83,8 mmol) Cyclopentadien getropft. Anschließend erfolgt die Zugabe von 13,7 ml (174 mmol) Pyrrolidin. Die Lösung wird für 2 h gerührt und anschließend mit Eisessig angesäuert. Das Produkt wird mit Diethylether extrahiert, über MgSO₄ getrocknet und das Lösungsmittel im Vakuum entfernt. Nach Kristallisation aus Diethylether erhält man das Produkt in 50%iger Ausbeute in Form gelber Nadeln.
¹H-NMR (200 MHz, CDCl₃): 7,9 - 7,3 (m, 5H, Ph-H); 6,5 (s, 4H, Cp-H); 3,3 - 2,7 (m, 4H, CH₂); 2,2 (s, 3H, CH₃).

### 7,7-Dimethyl-4-phenyl-4,5,6,7-tetrahydroinden-cis-4-ol

6,3 g (26 mmol) 1-Phenyl-4(2',4'-cyclopentadien-1'-yliden)-pentan-1-on werden in 300 ml Diethylether gelöst und innerhalb von 10 min wird eine Lösung von Me₂CuLi zugetropft (aus 11,2 g Cul, 250 ml Diethylether, 65 ml einer 1,8 molaren MeLi-Lösung). Die Suspension wird für weitere 4 Stunden gerührt und anschließend mit Wasser hydrolysiert. Die wässrige Phase wird mit Diethylether extrahiert, die vereinigten etherischen Phasen werden mit Wasser gewaschen, über MgSO₄ getrocknet und anschließend wird das Lösungsmittel im Vakuum entfernt. Man erhält das Produkt in 93%iger Ausbeute.
¹H-NMR (200 MHz, CDCl₃): 7,6 - 7,2 (m, 5H, Ph-H); 6,5; 6,1; 5,9 (je m, je 1H, Cp-H); 3,6 (s, 1H, OH); 2,3 - 2,1 (m, 1H, CH); 1,9 - 1,5 (m, 4H, CH₂); 1,3 (s, 3H, CH₃); 1,2 (s, 3H, CH₃).

### 7,7-Dimethyl-4-phenyl-(1,3-dienyliden)-4,5,6,7-tetrahydroinden

Zu einer Lösung von 6,2 g (26 mmol) 7,7-Dimethyl-4-phenyl-4,5,6,7-tetrahydroinden-cis-4-ol in 200 ml Diethylether wird bei -30°C eine Lösung von 2,9 g (27 mmol) Lithiumdiisopropylamid in 100 ml Tetrahydrofuran getropft. Die Lösung wird für 12 Stunden bei Raumtemperatur gerührt, mit Wasser hydrolysiert und das Produkt mit Diethylether extrahiert. Nach Trocknen über MgSO₄ und Entfernen des Lösungsmittels im Vakuum enthält man in 97%iger Ausbeute das Produkt.
¹H-NMR (200 MHz, CDCl₃): 7,5 - 7,3 (m, 5H, Ph-H); 6,5; 6,2; 6,1 (je m, je 1H, Cp-H); 2,8 (t, 2H, CH₂); 1,8 (t, 2H, CH₂); 1,2 (s, 6H, CH₃).

### 4,4'-Bis(7,7-dimethyl-4-phenyl-4,5,6,7-tetrahydroinden)

Zu 1 g (25 mmol) granuliertem Calcium in 200 ml Tetrahydrofuran werden 300 mg (1,1 mmol) HgCl₂ gegeben. Man rührt bei Raumtemperatur und gibt 0,2 g Quecksilber hinzu und rührt noch weitere 12 Stunden. Die Lösung wird auf - 30°C gekühlt und innerhalb von 10 min wird eine Lösung von 2,0 g (9 mmol) 7,7-Dimethyl-4-phenyl-(1,3-dienyliden)-4,5,6,7-tetrahydro-inden in 40 ml Tetrahydrofuran zugetropft. Nach 12 stündigem Rühren wird das Reaktionsgemisch hydrolysiert und das Produkt mit Diethylether extrahiert. Nach Trocknen über MgSO₄ und Entfernen des Lösungsmittels im Vakuum enthält man in 98%iger Ausbeute das Produkt, welches in Form von Doppelbindungsisomeren auftritt, aber in der Verbrückungsposition stereoselektiv nur eine trans-Verknüpfung aufweist.
¹H-NMR (200 MHz, CDCl₃): 7,5 - 7,0 (m, 10H, Ph-H); 6,7 - 5,9 (m, 4H, Cp-H); 3,1 - 2,6 (m, 4H, CH₂); 2,2 - 0,9 (m, 8H, CH₂); 1,2 (s, 6H, CH₃); 0,8 (s, 6H, CH₃).

### trans-4,4'-Bis(4-phenyl-7,7-dimethyl-4,5,6,7-η⁵-tetrahydroindenyl)zirkoniumdichlorid

Zu einer Lösung von 1,2 g (4,4 mmol) 4,4'-Bis(7,7-dimethyl-4-phenyl-4,5,6,7-tetrahydro-inden) in 100 ml Toluol werden 5,7 ml einer 1,6 molaren Lösung von n-Butyllithium in Toluol gegeben und die Lösung für 4 Stunden gerührt. Anschließend werden 1,0 g Zirkoniumtetrachlorid zugegeben und die Lösung für 12 h gerührt. Das Lithiumchlorid wird durch eine Filtration abgetrennt und das Filtrat wird im Vakuum bis zur Trockne eingeengt und anschließend mit Pentan aufgenommen. Die Suspension wird filtriert und das violett gefärbte Pulver NMR-spektroskopisch charakterisiert.
¹H-NMR (200 MHz, CD₂Cl₂): 7,4 - 7,2 (m, 10H, Ph-H); 7,1 - 6,6 (m, 6H, Cp-H); 2,7 (m, 2H, CH₂); 1,9 - 0,8 (m, 6H, CH₂); 1,3 (s, 6H, CH₃); 1,2 (s, 6H, CH₃).

## Patentansprüche

1. Übergangsmetallverbindung der Formel I 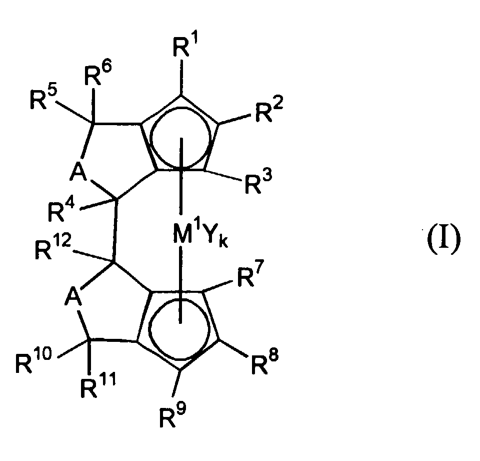
worin M¹ ein Übergangsmetall der Gruppe IIIb, IVb, Vb oder VIb des Periodensystems der Elemente ist,
Y gleich oder verschieden sind und ein Wasserstoffatom, eine OH-Gruppe, ein Halogenatom, eine C₁-C₄₀-kohlenwasserstoffhaltige Gruppe oder eine NR¹⁵₂-Gruppe, worin R¹⁵ ein Halogenatom, eine C₁-C₁₀ Alkylgruppe oder eine C₆-C₁₀-Arylgruppe ist, bedeuten,
k eine ganze Zahl ist, die der Wertigkeit des Übergangsmetallatoms M¹ minus zwei entspricht und im Fall, wenn Y eine Butadieneinheit bedeutet, k gleich 1 ist,
R¹, R², R³, R⁷, R⁸ und R⁹ gleich oder verschieden sind und ein Wasserstoffatom, ein Halogenatom, eine C₁-C₄₀-kohlenwasserstoffhaltige Gruppe, einen -SiR¹⁵₃, -NR¹⁵₂, -SiOR^{¹5}₃, -SiSR¹⁵₃ oder -PR¹⁵₂-Rest bedeuten, worin R¹⁵ ein Halogenatom, eine C₁-C₁₀ Alkylgruppe oder eine C₆-C₁₀-Arylgruppe ist, oder zwei oder mehr benachbarte Reste R¹, R² und R³ oder R⁷_{,} R⁸ und R⁹ zusammen mit den sie verbindenen Atomen ein Ringsystem bilden,
R⁴, R⁵, R⁶, R¹⁰, R¹¹ und R¹² gleich oder verschieden sind und ein Wasserstoffatom, ein Halogenatom, eine C₁-C₄₀-kohlenwasserstoffhaltige Gruppe, einen -SiR¹⁵₃, -NR¹⁵₂, -SiOR¹⁵₃, -SiSR¹⁵₃ oder -PR¹⁵₂-Rest bedeuten, worin R¹⁵ ein Halogenatom, eine C₁-C₁₀ Alkylgruppe oder eine C₆-C₁₀-Arylgruppe ist, oder zwei oder mehr Reste R⁴, R⁵ und R⁶ oder R¹⁰, R¹¹ und R¹² zusammen mit den sie verbindenden Atomen ein Ringsystem bilden,
A gleich 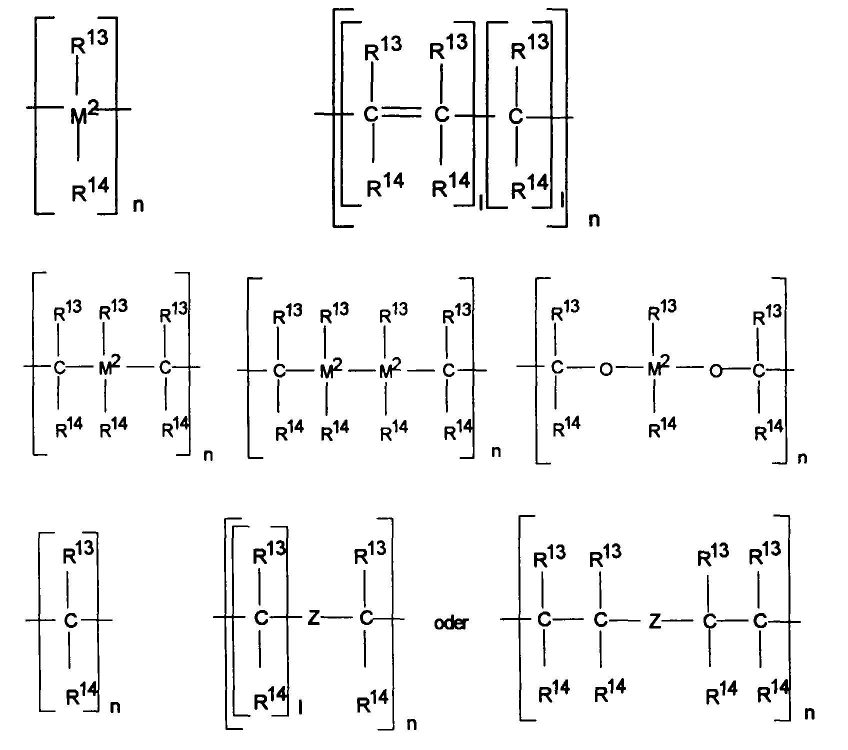 ist, wobei n eine ganze Zahl von 1 bis 20 ist, l eine ganze Zahl von 1 bis 20 ist, Z gleich
〉NR¹⁵ , 〉CO , 〉PR¹⁵ , 〉P(O)R¹⁵ , 〉SO ,
SO₂, O oder S ist, worin R¹⁵ ein Halogenatom, eine C₁-C₁₀ Alkylgruppe oder eine C₆-C₁₀-Arylgruppe ist,
R¹³ und R¹⁴ gleich oder verschieden sind und ein Wasserstoffatom, ein Halogenatom oder eine C₁-C₄₀-kohlenwasserstoffhaltige Gruppe sind oder jeweils zwei Reste R¹³, jeweils zwei Reste R¹⁴, oder je ein Rest R¹³ und R¹⁴ jeweils mit den sie verbindenen Atomen ein Ringsystem bilden, M² Silizium, Germanium oder Zinn ist, und die Übergangsmetallverbindung der Formel I verschieden ist von 8,8'-Biguaiazulen-titandichlorid.

2. Übergangsmetallverbindung der Formel I gemäß Anspruch 1, worin
M¹ ein Metall der Gruppe IV b des Periodensystems der Elemente ist,
Y gleich sind und insbesondere eine C₁-C₁₀-kohlenwasserstoffhaltige Gruppe oder ein Halogenatom bedeuten,
R¹, R², R³, R⁷, R⁸ und R⁹ gleich oder verschieden sind und ein Wasserstoffatom oder eine C₁-C₁₀-kohlenwasserstoffhaltige Gruppe sind oder zwei oder mehr benachbarte Reste R¹, R² und R³ oder R⁷_{,} R⁸ und R⁹ zusammen mit den sie verbindenen Atomen ein Ringsystem bilden,
R⁴, R⁵, R⁶, R¹⁰, R¹¹ und R¹² gleich oder verschieden sind und ein Wasserstoffatom, ein Halogenatom oder eine C₁-C₁₀-kohlenwasserstoffhaltige Gruppe sind,
A gleich 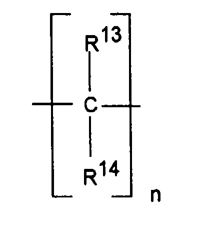 ist, wobei n eine ganze Zahl von 1 bis 8 ist, R¹³ und R¹⁴ gleich oder verschieden sind und ein Wasserstoffatom oder eine C₁-C₁₀-kohlenwasserstoffhaltige Gruppe sind, oder jeweils zwei Reste R¹³, jeweils zwei Reste R¹⁴, oder je ein Rest R¹³ und R¹⁴ jeweils mit den sie verbindenen Atomen ein Kohlenwasserstoffringsystem bilden.

3. Übergangsmetallverbindung der Formel I gemäß Anspruch 1 oder 2, worin
M¹ gleich Titanium oder Zirkonium ist,
Y gleich sind und Methyl,- Phenyl- oder Chlor bedeuten,
R¹, R², R³ R⁷_{,} R⁸ und R⁹ gleich oder verschieden sind und ein Wasserstoffatom, eine C₁-C₄-Alkylgruppe oder eine C₆-Arylgruppe bedeuten, oder R¹ und R² oder R² und R³ oder R⁷ und R⁸ oder R⁸ und R⁹ mit den sie verbindenen Atomen ein aromatisches Kohlenwasserstoffringsystem bilden,
A gleich 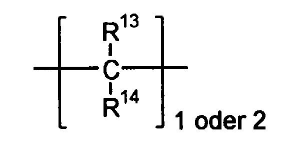 ist, worin R¹³ und R¹⁴ gleich oder verschieden sind und ein Wasserstoffatom, eine C₁-C₄-Alkylgruppe oder eine C₆-Arylgruppe sind.

4. Übergangsmetallverbindung der Formel I gemäß Anspruch 1, 2 oder 3, worin die Übergangsmetallverbindung zwei gleich substituierte Cyclopentadienylliganden aufweist, so daß die Übergangsmetallverbindung eine Symmetrie aufweist.

5. Verfahren zur Herstellung einer Übergangsmetallverbindung gemäß einem oder mehreren der Ansprüche 1 bis 4, wobei
a) eine Verbindung der Formel II in Gegenwart eines Metalls oder einer Base mit einer Verbindung der Formel III umgesetzt wird, 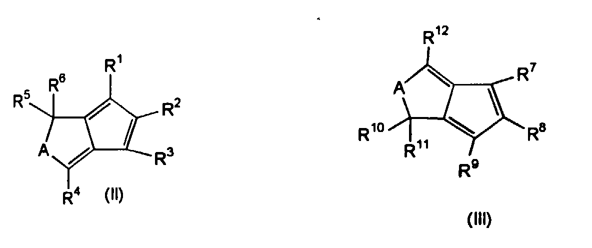
b) das Reaktionsprodukt mit einer Base R¹⁶M³ deprotoniert wird, worin R¹⁶ eine C₁-C₁₀-kohlenwasserstoffhaltige Gruppe und M³ ein Metall der Gruppe Ia oder IIa des Periodensystems der Elemente ist, und
c) die so erhaltene Verbindung mit einer Metallverbindung M¹Yₖ₊₂ umgesetzt wird.

6. Katalysator, enthaltend mindestens eine Übergangsmetallverbindung und mindestens einen Cokatalysator, wobei die Übergangsmetallverbindung eine Verbindung der Formel I ist , 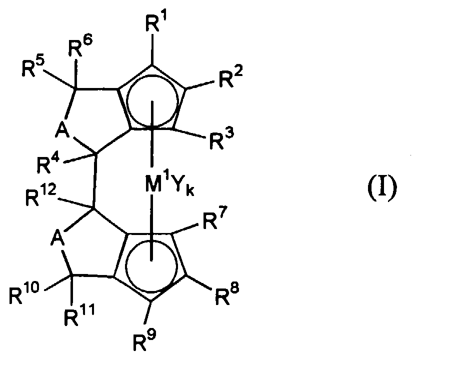
worin M¹ ein Übergangsmetall der Gruppe IIIb, IVb, Vb oder VIb des Periodensystems der Elemente ist,
Y gleich oder verschieden sind und ein Wasserstoffatom, eine OH-Gruppe, ein Halogenatom, eine C₁-C₄₀-kohlenwasserstoffhaltige Gruppe oder eine NR¹⁵₂-Gruppe, worin R¹⁵ ein Halogenatom, eine C₁-C₁₀ Alkylgruppe oder eine C₆-C₁₀-Arylgruppe ist, bedeuten,
k eine ganze Zahl ist, die der Wertigkeit des Übergangsmetallatoms M¹ minus zwei entspricht und im Fall, wenn Y eine Butadieneinheit bedeutet, k gleich 1 ist,
R¹, R², R³, R⁷, R⁸ und R⁹ gleich oder verschieden sind und ein Wasserstoffatom, ein Halogenatom, eine C₁-C₄₀-kohlenwasserstoffhaltige Gruppe, einen -SiR¹⁵₃, -NR¹⁵₂, -SiOR¹⁵₃, -SiSR¹⁵₃ oder -PR¹⁵₂-Rest bedeuten, worin R¹⁵ ein Halogenatom, eine C₁-C₁₀ Alkylgruppe oder eine C₆-C₁₀-Arylgruppe ist, oder zwei oder mehr benachbarte Reste R¹, R² und R³ oder R⁷_{,} R⁸ und R⁹ zusammen mit den sie verbindenen Atomen ein Ringsystem bilden,
R⁴, R⁵, R⁶, R¹⁰, R¹¹ und R¹² gleich oder verschieden sind und ein Wasserstoffatom, ein Halogenatom, eine C₁-C₄₀-kohlenwasserstoffhaltige Gruppe, einen -SiR¹⁵₃, -NR¹⁵₂, -SiOR¹⁵₃, -SiSR¹⁵₃ oder -PR¹⁵₂-Rest bedeuten, worin R¹⁵ ein Halogenatom, eine C₁-C₁₀ Alkylgruppe oder eine C₆-C₁₀-Arylgruppe ist, oder zwei oder mehr Reste R⁴, R⁵ und R⁶ oder R¹⁰, R¹¹ und R¹² zusammen mit den sie verbindenden Atomen ein Ringsystem bilden,
A gleich 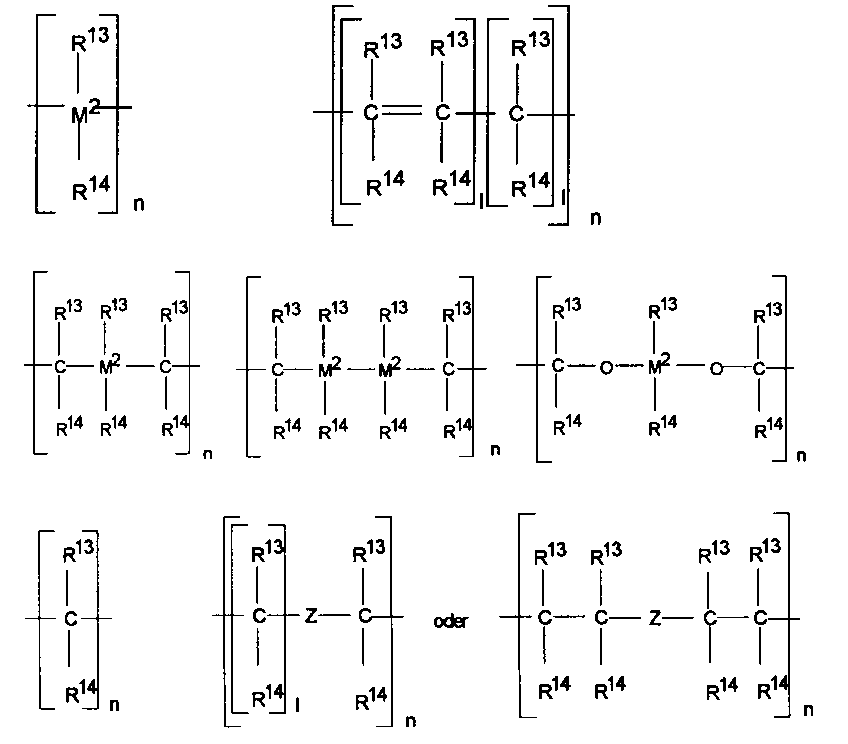 ist, wobei n eine ganze Zahl von 1 bis 20 ist, l eine ganze Zahl von 1 bis 20 ist, Z gleich
〉NR¹⁵ , 〉CO , 〉PR¹⁵ , 〉P(O)R¹⁵ , 〉SO ,
SO₂, O oder S ist, worin R¹⁵ ein Halogenatom, eine C₁-C₁₀ Alkylgruppe oder eine C₆-C₁₀-Arylgruppe ist,
R¹³ und R¹⁴ gleich oder verschieden sind und ein Wasserstoffatom, ein Halogenatom oder eine C₁-C₄₀-kohlenwasserstoffhaltige Gruppe sind oder jeweils zwei Reste R¹³, jeweils zwei Reste R¹⁴, oder je ein Rest R¹³ und R¹⁴ jeweils mit den sie verbindenen Atomen ein Ringsystem bilden, M² Silizium, Germanium oder Zinn ist.

7. Katalysator gemäß Anspruch 6, worin die Übergangsmetallverbindung wie in Anspruch 2 definiert ist.

8. Katalysator gemäß Anspruch 6 oder 7, worin die Übergangsmetallverbindung wie in Anspruch 3 definiert ist.

9. Katalysator gemäß einem oder mehreren der Ansprüche 6 bis 8, zusätzlich enthaltend einen Träger.

10. Verfahren zur Herstellung eines Olefinpolymeren durch Polymerisation eines oder mehrerer Olefine in Gegenwart eines Katalysators gemäß einem oder mehreren der Ansprüche 6 bis 9.

11. Verwendung eines Katalysators gemäß einem oder mehreren der Ansprüche 6 bis 9 zur Herstellung eines Olefinpolymeren.

12. Olefinpolymer, herstellbar nach dem Verfahren gemäß Anspruch 10.
